# EUROPÄISCHE PATENTSCHRIFT

(11) **EP 1 334 884 B1**
(45) Veröffentlichungstag und Bekanntmachung des Hinweises auf die Patenterteilung: **19.04.2006**
(21) Anmeldenummer: 03002560.5
(22) Anmeldetag: 06.02.2003
(51) Int. Cl.: B60R 21/20

(54) **Fahrzeugsitz mit einem in einer Rückenlehne integrierten Gassackmodul**
Backrest integrated airbag module
Module d'airbag intégré dans un dossier de siège

(30) Priorität: 07.02.2002 DE 20201868 U
(43) Veröffentlichungstag der Anmeldung: 13.08.2003
(73) Patentinhaber: TRW Automotive GmbH, 73553 Alfdorf (DE)
(72) Erfinder: Acker, Dominique, 74417 Gschwend (DE); Loos, Andreas, 73312 Geislingen (DE); Hofmann, Sven, 73525 Schwäbisch Gmünd (DE)
(74) Vertreter: Kitzhofer, Thomas

(56) Entgegenhaltungen:
- DE-A- 19 950 702
- US-A- 6 007 091
- US-A- 6 045 151
- US-B1- 6 168 192
- PATENT ABSTRACTS OF JAPAN vol. 1998, no. 03, 27. Februar 1998 (1998-02-27) -& JP 09 295549 A (TOYODA GOSEI CO LTD), 18. November 1997 (1997-11-18)

## Beschreibung

Die Erfindung betrifft einen Fahrzeugsitz mit einer Rückenlehne und mit einem in die Rückenlehne integrierten Gassackmodul gemäß dem Oberbegriff des Anspruchs 1.

Die derzeit am häufigsten eingesetzten in die Rückenlehne integrierten Gassäcke sind möglichst kompakt kastenförmig gefaltet. Um einen optimalen Schutz sowohl für den Thorax-, den Abdomen- als auch den Pelvisbereich des Fahrzeuginsassen zu bieten, muß aufwendig sichergestellt sein, daß die Entfaltung des Gassacks nach oben und nach unten, d.h. in Richtung der Erstreckung der Rückenlehne und nach vorne in Fahrtrichtung, d.h. senkrecht zur Erstreckung der Rückenlehne rechtzeitig erfolgt.

Die US 6,007,091 offenbart hierzu einen Fahrzeugsitz, in dessen Rückenlehne eine Tasche vorgesehen ist, in die ein aufblasbares Sicherheitskissen eingesetzt werden kann. Im Bereich der Tasche weist der Sitzbezug eine Reißnaht auf, so daß sich das Kissen bei Bedarf entfalten läßt.

Sowohl aus der DE 199 50 702 A1 als auch aus der JP 09295549 A ist ein Kraftfahrzeugsitz bekannt, dessen Sitzteil bzw. Rückenlehne eine aufblasbare Seitenwange umfaßt, um im Falle einer Kollision eine seitliche Überdeckung des Fahrzeuginsassen zu gewährleisten. Die Seitenwange weist ein elastisches Sitzbezug-Material auf, wodurch sich ein im Inneren der Seitenwange angeordneter Airbag, falls nötig, entfalten läßt. Alternativ hierzu wird in der DE 199 50 702 A1 außerdem vorgeschlagen, den Bezug im Bereich der Seitenwange durch einen zusätzlichen Gewebestreifen zu erweitern, der bei nicht ausgelöstem Airbag innerhalb der Polsterung zusammengefaltet und durch eine Reißnaht gesichert ist.

Die US 6,045,151 zeigt einen Fahrzeugsitz mit integriertem Seitenairbag, der von einer Kraftkonzentrationsvornchtung in Form einer Hülse aus nicht dehnbarem Material umgeben ist. Diese soll verhindern, daß der Sitzbezug beim Entfalten des Airbags an einer anderen Stelle als einer vorgegebenen Reißnaht aufreißt.

Die gattungsbildende US 6,168,192 offenbart einen Fahrzeugsitz mit integriertem Gassackmodul, bei dem sich eine den gefalteten Gassack enthaltende starre Schiene über die gesamte Länge der Rückenlehne sowie der Kopfstütze erstreckt.

Mit der Erfindung soll sichergestellt werden, daß der Fahrzeuginsasse rechtzeitig und ausreichend durch den Gassack geschützt ist, bei gleichzeitig geringem technischen Aufwand in der Fertigung und der Montage des Gassackmoduls.

Zu diesem Zweck ist erfindungsgemäß vorgesehen, daß die Höhe des Gassacks in einem aufgeblasenen Zustand der vertikalen Erstreckung der Rückenlehne entspricht. Der Gasgenerator ist bezogen auf die Längserstreckung des gefalteten Gassacks in etwa in dessen Mitte angeordnet und der zusammengelegte Gassack weist zwei flexible Paketabschnitte auf, die auf beiden Seiten des Gasgenerators angeordnet sind. Der Gassack ist also nur in einer Richtung zusammengelegt, und seine Enden sind nicht quer zur Hauptfaltungsrichtung umgefaltet. Hierdurch entfaltet sich der Gassack hauptsächlich nur in einer Richtung in etwa senkrecht zur vertikalen Erstreckung der Rückenlehne. Da keine Entfaltung parallel zur vertikalen Erstreckungsrichtung der Rückenlehne stattfinden muß, erreicht der Gassack sehr schnell seine endgültige Position. Durch die große Höhe des Gassacks ist der Insasse sowohl im Thoraxbereich als auch im Abdomen- und Pelvisbereich geschützt. Durch seine langgestreckte Form ist das Gassackmodul auch in Rückenlehnen mit begrenztem Platzangebot einfach unterzubringen. Außerdem kann auf aufwendige Faltverfahren in mehreren Richtungen verzichtet werden.

Der Gassack kann auf jede geeignete Art zusammengelegt, z.B. gefaltet oder gerollt, sein, die das beschriebene Resultat erzielt, auch eine Kombination aus Falten und Rollen ist möglich.

Bevorzugt ist der Verlauf der flexiblen Paketabschnitte im eingebauten Zustand an die Kontur der Rückenlehne angepaßt. Wenigstens die Paketabschnitte verlaufen dann bogenförrnig. Die Entfaltungsrichtung des Gassacks wird hierdurch nicht beeinflußt. Auf diese Weise ist es möglich, einen relativ langen Gassack einfach in eine Rückenlehne zu integrieren.

Um die Baubreite des Gassackmoduls und damit den Platzbedarf im Sitz klein zu halten, kann zumindest im Bereich der flexiblen Paketabschnitte auf ein starres Außengehäuse verzichtet werden. Die Breite eines herkömmlichen Gasgenerators wird deshalb im Bereich der flexiblen Paketabschnitte deutlich unterschritten, so daß sich der zusammengelegte Gassack problemlos auch in einer Rückenlehne mit begrenztem Platzangebot unterbringen läßt. Außerdem erlaubt dies eine flexible Anpassung der Form des Gassackmoduls an das Design der Rückenlehne.

Um ein möglichst einfach zu handhabendes und zu integrierendes Modul zu erhalten, kann der Gasgenerator im Gassack angeordnet sein. In diesem Fall ist außerdem der Gasgenerator durch das Gassackgewebe vor Beschädigung und Verschmutzung geschützt.

Vorteilhaft ist das Gassackmodul als vormontierte Einheit ausgebildet, die zumindest im Bereich außerhalb des Gasgenerators, d.h. z.B. dem Abschnitt, der im oberen Teil der Rückenlehne angeordnet ist, ohne starres Außengehäuse ausgeführt ist.

In einer Ausführungsform der Erfindung ist vorgesehen, einen Schlauchgasgenerator, d.h. einen Gasgenerator ohne starres, sondern mit flexiblem Gehäuse, zu verwenden, was eine maximale Flexibilität des Moduls bewirkt.

In einer vorteilhaften Ausführungsform der Erfindung ist ein in das Polster des Sitzes bzw. der Rückenlehne durch Umschäumen eingebettetes Gehäuse vorgesehen, in das das Gassackmodul eingesetzt ist. Das Gehäuse erstreckt sich vorzugsweise nur im Bereich des Gasgenerators, es kann aber auch ein an die Kontur der Rückenlehne angepaßtes Gehäuse für den gesamten zusammengelegten Gassack vorgesehen sein. Das Gehäuse kann z.B. ein Gummischlauch oder ein Kunststoffprofil sein, das eine Schwächungszone, z.B. eine Perforation, aufweist, um die Entfaltung des Gassacks zu ermöglichen.

Es ist möglich, das Gassackmodul im Polster des Sitzes bzw. der Rückenlehne durch Umschäumen einzubetten. Das Gassackmodul kann entweder zusammen mit einem Gehäuse oder auch ohne Gehäuse im Polster durch Umschäumen eingebettet sein.

Alternativ ist auch möglich, in der Rückenlehne einen Aufnahmeraum für das Gassackmodul vorzusehen, wobei sich ein Abschnitt eines Sitzbezuges einwärts bis in den Aufnahmeraum erstreckt und das Gassackmodul umgibt. Ein Verhaken oder Verkleben des Gassacks mit dem Schaummaterial des Sitzes wird so verhindert. Der Sitzbezug kann erweitert werden, oder es kann eine separate Tasche aus Sitzbezugmaterial vorgesehen sein.

In einer anderen möglichen Ausführungsform der Erfindung weist die Rückenlehne einen Rahmen auf, und im Rahmen ist ein Aufnahmeraum für das Gassackmodul vorgesehen. Hier kann auf ein zusätzliches Gehäuse verzichtet werden, so daß sich die Baugröße des Gassackmoduls und der Rückenlehne weiter verringern läßt.

Weitere Merkmale und Vorteile der Erfindung ergeben sich aus der nachfolgenden Beschreibung mit Bezug auf die beigefügten Zeichnungen. In diesen zeigen:
- Figur 1 eine schematische Ansicht eines erfindungsgemäßen Fahrzeugsitzes mit einem Gassackmodul;
- Figur 2 das Gassackmodul aus Figur 1 mit ausgebreitetem Gassack;
- Figur 3 eine erste Art, den in Figur 2 gezeigten Gassack zusammenzulegen;
- Figur 4 eine zweite Art, den in Figur 2 gezeigten Gassack zusammenzulegen;
- Figur 5 einen schematischen Schnitt entlang der Linie B-B in Figur 1 durch einen erfindungsgemäßen Fahrzeugsitz mit einem in der Rückenlehne eingeschäumten Gehäuse für ein Gassackmodul;
- Figur 6 einen schematischen Schnitt entlang der Linie B-B in Figur 1 durch einen erfindungsgemäßen Fahrzeugsitz mit einem in die Rückenlehne eingesetzten Gassackmodul;
- Figur 7 einen schematischen Schnitt entlang der Linie B-B in Figur 1 durch einen erfindungsgemäßen Fahrzeugsitz mit einem in einer am Sitzrahmen ausgebildeten Aufnahme angeordneten Gassackmodul;
- Figur 8a einen schematischen Schnitt entlang der Linie B-B in Figur 1 durch einen erfindungsgemäßen Fahrzeugsitz mit einem in die Rückenlehne eingesetzten Gassackmodul;
- Figur 8b eine schematische Ansicht eines Fahrzeugsitzes nach Figur 8a;
- Figur 9 einen schematischen Schnitt entlang der Linie B-B in Figur 1 durch einen erfindungsgemäßen Fahrzeugsitz mit einem in die Rückenlehne eingesetzten Gassackmodul;
- Figur 10 einen schematischen Schnitt entlang der Linie A-A in Figur 1 durch einen erfindungsgemäßen Fahrzeugsitz mit einem in die Rückenlehne eingesetzten Gassackmodul; und
- Figur 11 ein Gassackmodul mit einem Schlauchgasgenerator.

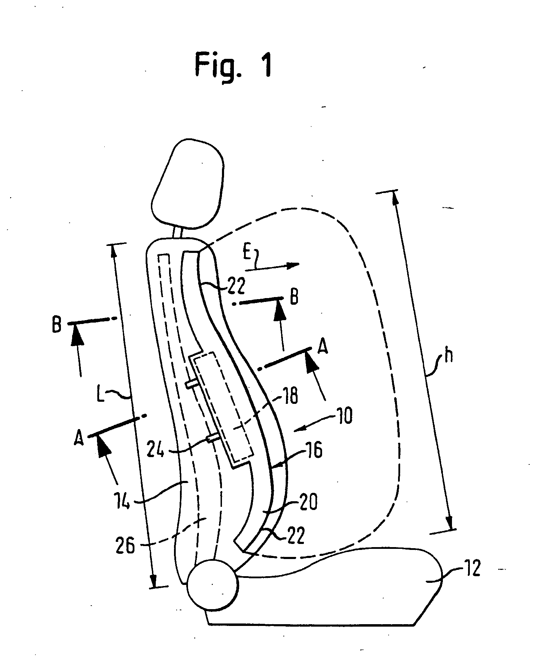

In Figur 1 ist ein erfindungsgemäßer Fahrzeugsitz 10 dargestellt, der eine Sitzfläche 12 und eine sich daran anschließende Rückenlehne 14 aufweist. Ein Gassackmodul 16 mit einem Gasgenerator 18 und einem zusammengelegten Gassack 20 ist im Inneren der Rückenlehne 14 angeordnet.

Der Gasgenerator 18 ist bezogen auf die Längserstreckung des zusammengelegten Gassacks 20 in etwa in dessen Mitte angeordnet. Auf beiden Seiten des Gasgenerators 18 erstreckt sich jeweils ein flexibler Paketabschnitt 22 des zusammengelegten Gassacks aufwärts bzw. abwärts. Das Gassackmodul 16 ist so in der Rückenlehne 14 angeordnet, daß der zusammengelegte Gassack 20 im wesentlichen längs der vertikalen Erstreckung L der Rückenlehne angeordnet ist, wobei die flexiblen Paketabschnitte 22 der Kontur der Rückenlehne 14 folgen.

Der Gasgenerator 18 ist in der hier dargestellten Ausführungsform im Inneren des Gassacks 20 angeordnet und kann z.B. über Befestigungsbolzen 24 an einem Sitzrahmen 26 befestigt sein.

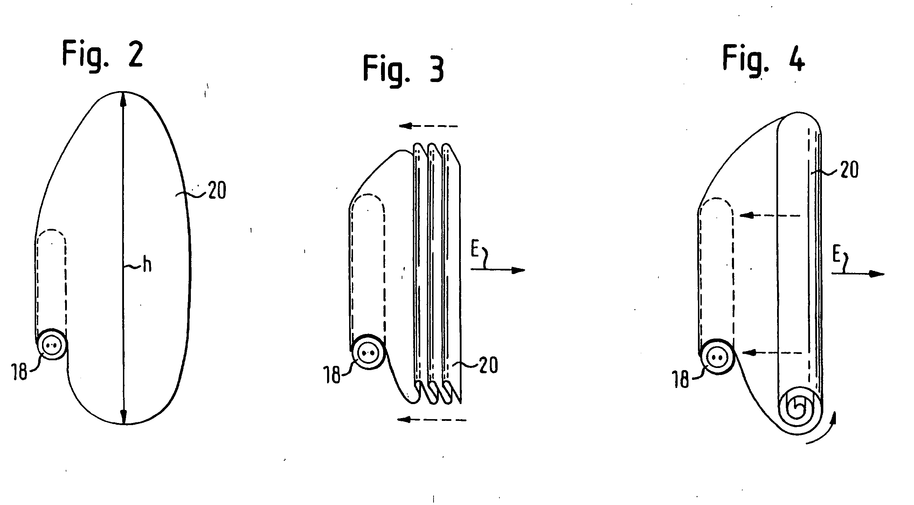

Der Gassack 20 (in Figur 2 im ausgebreiteten, aber noch unaufgeblasenen Zustand gezeigt), ist so zusammengelegt, daß er sich nur in einer Richtung in etwa senkrecht zur vertikalen Erstreckung der Rückenlehne 14 entfaltet (in den Figuren mit Pfeil E angedeutet). Entlang der vertikalen Erstreckung der Rückenlehne ist der Gassack gestreckt, d.h. nicht gefaltet, während er quer zu dieser Richtung zusammengelegt ist. Ein Einklappen oder Einrollen des Gassacks 20 in Richtung der vertikalen Erstreckung L ist nicht vorgesehen. Zwei mögliche Arten, den Gassack 20 zusammenzulegen, sind in den Figuren 3 und 4 gezeigt. In Figur 3 ist eine Zickzackfaltung dargestellt, während der Gassack in Figur 4 gerollt ist. Natürlich ist auch jede beliebige andere Art des Zusammenlegens, die zu einem Gassack führt, der sich nur entlang der Richtung E entfaltet (entrollt soll diesbezüglich unter den Begriff Entfalten fallen), denkbar.

Die Höhe h des Gassacks 20 entspricht sowohl im zusammengelegten als auch im aufgeblasenen Zustand im wesentlichen der vertikalen Erstreckung L der Rückenlehne 14. Im aufgeblasenen Zustand bietet der Gassack sowohl dem Thoraxbereich als auch dem Abomen- und Pelvisbereich eines Fahrzeuginsassen Schutz. In einer möglichen Ausführungsform ist der Gassack etwa 55 cm hoch. Der zentral angeordnete Gasgenerator 18 hat in diesem Beispiel eine Höhe von etwa 17 cm.

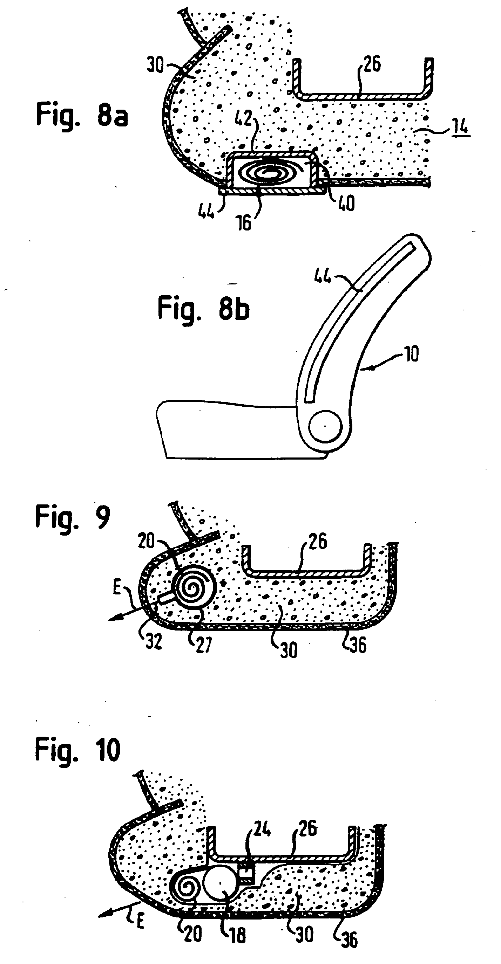

Die flexiblen Paketabschnitte 22 können von einer ebenfalls flexiblen Schutzhülle 27 (siehe Figur 9) umgeben, aber ansonsten ohne starres Gehäuse in der Rückenlehne 14 integriert sein. Dies ermöglicht es, daß der Querschnitt der flexiblen Paketabschnitte 22 deutlich geringer sein kann als der Querschnitt des Gasgenerators 18.

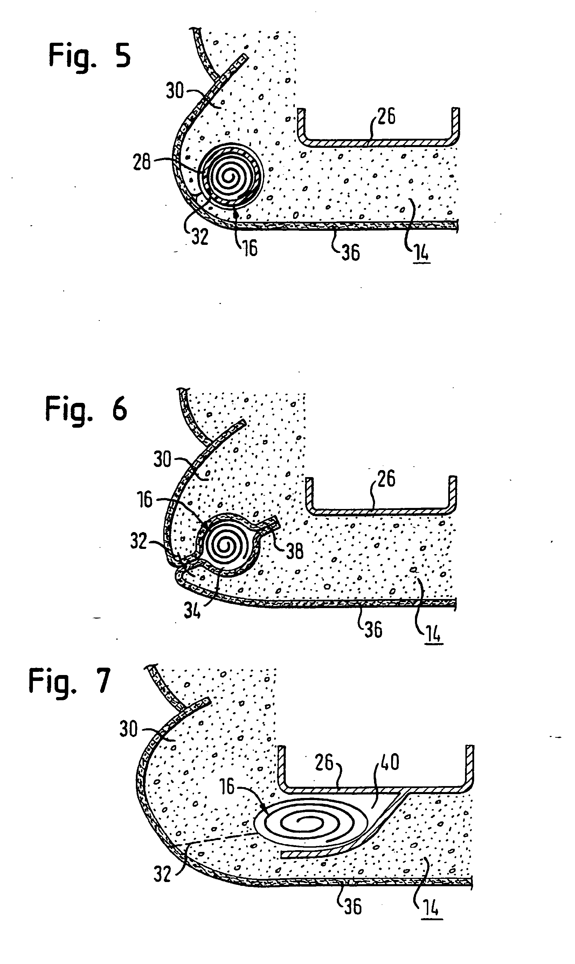

In einer anderen, in Figur 5 dargestellten Variante ist zur Aufnahme des Gassackmoduls 16 in der Rückenlehne 14 ein Gehäuse 28 vorgesehen, das im Schaum 30 des Polsters der Rückenlehne 14 durch Umschäumen eingebettet ist. Das Gehäuse 28 kann z.B. durch einen Gummischlauch oder ein Kunststoffprofil gebildet sein. Zum Äußeren der Rückenlehne 14 gerichtet weist das Gehäuse 28 eine Sollbruchstelle 32 auf, durch die der Gassack 20 austreten kann. Das Gehäuse 28 kann nur im Bereich des Gasgenerators 18 oder über die gesamte Länge des Gassackmoduls vorgesehen sein.

Es ist möglich, nur das Gehäuse 28 im Polster zu umschäumen und das Gassackmodul 16 anschließend einzusetzen. Ebenso ist es möglich, das Gehäuse mitsamt dem Gassackmodul 16 im Polster zu umschäumen.

Es wäre auch denkbar, das Gassackmodul 16 ohne weiteres Gehäuse im Polster zu umschäumen. In diesem Fall sollte der Zünderbereich des Gasgenerators 18 schaumfrei gehalten werden.

In einer anderen, in Figur 6 dargestellten Variante ist in der Rückenlehne 14 ein Aufnahmeraum 34 für das Gassackmodul 16 vorgesehen, der mit einem einwärts verlaufenden Abschnitt eines Sitzbezugs 36 ausgekleidet ist. Zum Äußeren der Rückenlehne 14 ist wiederum eine hier durch eine Naht gebildete Sollbruchstelle 32 vorgesehen. Im Inneren der Rückenlehne 14 kann der Abschnitt des Sitzbezugs auf eine geeignete Weise, z.B. durch einen Klettverschluß, einen Reißverschluß oder durch eine Naht 38 verschlossen sein. Der Abschnitt kann einstückig mit dem Sitzbezug 36 ausgebildet sein, es kann sich aber auch um eine separate Tasche aus Sitzbezugmaterial handeln.

In einer weiteren, in Figur 7 dargestellten Variante weist der Rahmen 26 der Rückenlehne 14 einen Aufnahmeraum 40 für das Gassackmodul 16 auf. Auch in diesem Fall ist wieder eine Sollbruchstelle 32, diesmal in Form einer Perforation im Schaum 30 vorgesehen, um das Austreten des Gassacks 20 zu ermöglichen.

In einer weiteren, in den Figuren 8a und 8b dargestellten Variante ist an der Außenseite des Polsters der Rückenlehne 14 ein Aufnahmeraum 40 ausgespart, in die ein Gehäuse 42 eingesetzt ist. Im Gehäuse 42 ist das Gassackmodul 16 aufgenommen. Nach außen ist das Gehäuse 42 durch einem Deckel 44 verschlossen, der sich bei der Aktivierung des Gassackmoduls öffnet, um den Gassack freizugeben.

Bei der in den Figuren 9 und 10 gezeigten Variante ist auf ein starres Gehäuse vollständig verzichtet. Das Gassackmodul ist lediglich zumindest im Bereich der flexiblen Paketabschnitte 22 von einer Schutzhülle 27 umgeben.

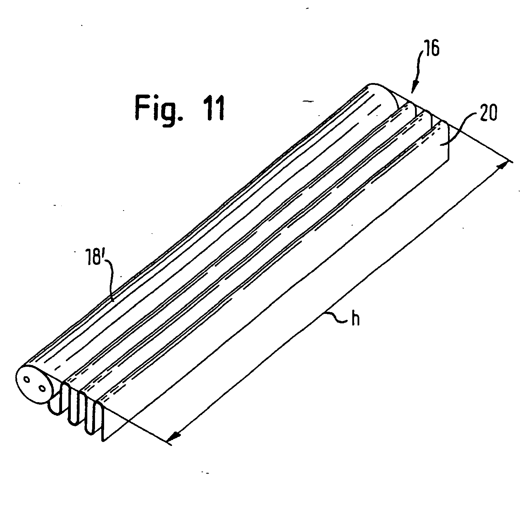

Für das Gassackmodul 16 kann auch ein flexibler Schlauchgasgenerator 18' verwendet werden, der kein starres Gehäuse aufweist. Der Schlauchgasgenerator 18' kann sich entweder, wie in Figur 11 zu sehen, über die gesamte Länge h des Gassacks 20 oder nur über einen Teil davon erstrecken.

## Patentansprüche

1. Fahrzeugsitz mit einer Rückenlehne (14) und mit einem in die Rückenlehne (14) integrierten Gassackmodul (16), das einen Gassack (20) und einen Gasgenerator (18) aufweist,
wobei der Gassack (20) im eingebauten Zustand so angeordnet ist, daß er in Richtung der vertikalen Erstreckung (L) der Rückenlehne (14) gestreckt verläuft und quer zur vertikalen Erstreckungsrichtung (L) zusammengelegt ist, und wobei der Gassack (20) bei Entfaltung aus der Rückenlehne (14) heraustritt,
**dadurch gekennzeichnet, daß** die Höhe (h) des Gassacks (20) in einem aufgeblasenen Zustand der vertikalen Erstreckung (L) der Rückenlehne (14) entspricht,
der Gasgenerator (18) bezogen auf die Längserstreckung des gefalteten Gassacks (20) in etwa in dessen Mitte angeordnet ist und
der zusammengelegte Gassack (20) zwei flexible Paketabschnitte (22) aufweist, die auf beiden Seiten des Gasgenerators (18) angeordnet sind.

2. Fahrzeugsitz nach Anspruch 1, **dadurch gekennzeichnet, daß** der Verlauf der flexiblen Paketabschnitte (22) an die Kontur der Rückenlehne (14) angepaßt ist.

3. Fahrzeugsitz nach einem der vorhergehenden Ansprüche, **dadurch gekennzeichnet, daß** der Gasgenerator (18) im Gassack (20) angeordnet ist.

4. Fahrzeugsitz nach einem der vorhergehenden Ansprüche, **dadurch gekennzeichnet, daß** ein in ein Polster des Sitzes (10) durch Umschäumen eingebettetes Gehäuse (28) vorgesehen ist, in das das Gassackmodul (16) eingesetzt ist.

5. Fahrzeugsitz nach einem der vorhergehenden Ansprüche, **dadurch gekennzeichnet, daß** das Gassackmodul (16) im Sitz (10) durch Umschäumen eingebettet ist.

6. Fahrzeugsitz nach einem der Ansprüche 1 bis 3, **dadurch gekennzeichnet, daß** die Rückenlehne (14) einen Rahmen (26) aufweist und daß im Rahmen (26) ein Aufnahmeraum (40) für das Gassackmodul (16) vorgesehen ist.

7. Fahrzeugsitz nach einem der vorhergehenden Ansprüche, **dadurch gekennzeichnet, daß** in der Rückenlehne (14) ein Aufnahmeraum (34) für das Gassackmodul (16) vorgesehen ist und daß sich ein Abschnitt eines Sitzbezugs (36) einwärts bis in den Aufnahmeraum (34) erstreckt und das Gassackmodul (16) umgibt.

8. Fahrzeugsitz nach einem der vorhergehenden Ansprüche, **dadurch gekennzeichnet, daß** das Gassackmodul (16) eine vormontierte Einheit ist, die zumindest im Bereich außerhalb des Gasgenerators (18) ohne starres Außengehäuse ausgeführt ist.

9. Fahrzeugsitz nach einem der vorhergehenden Ansprüche, **dadurch gekennzeichnet, daß** der Gasgenerator ein Schlauchgasgenerator (18') ist.

## Claims

1. A vehicle seat comprising a back rest (14) and a gas bag module (16) which is integrated into the back rest (14) and includes a gas bag (20) and a gas generator (18),
the gas bag (20) in the installed state being arranged such that it runs extended in the direction of the vertical extent (L) of the back rest (14) and is folded up transversely to the vertical direction of extent (L), and the gas bag (20) exiting from the back rest (14) during deployment,
**characterized in that** the height (h) of the gas bag (20) in an inflated state corresponds to the vertical extent (L) of the back rest (14),
the gas generator (18), in relation to the longitudinal extent of the folded gas bag (20), is arranged substantially in the centre thereof, and
the folded-up gas bag (20) has two flexible package sections (22) which are arranged on either side of the gas generator (18).

2. The vehicle seat according to Claim 1, **characterized in that** the course of the flexible package sections (22) is adapted to the contour of the back rest (14).

3. The vehicle seat according to either of the preceding claims, **characterized in that** the gas generator (18) is arranged in the gas bag (20).

4. The vehicle seat according to any of the preceding claims, **characterized in that** a housing (28) is provided which is embedded in a padding of the seat (10) by being encased in foam, the gas bag module (16) being inserted in the housing (28).

5. The vehicle seat according to any of the preceding claims, **characterized in that** the gas bag module (16) is embedded in the seat (10) by being encased in foam.

6. The vehicle seat according to any of Claims 1 to 3, **characterized in that** the back rest (14) has a frame (26) and that a receiving space (40) for the gas bag module (16) is provided in the frame (26).

7. The vehicle seat according to any of the preceding claims, **characterized in that** a receiving space (34) for the gas bag module (16) is provided in the back rest (14), and that a section of a seat cover (36) extends inwards as far as into the receiving space (34) and surrounds the gas bag module (16).

8. The vehicle seat according to any of the preceding claims, **characterized in that** the gas bag module (16) is a pre-assembled unit which is constructed without a rigid outer housing at least in the region outside the gas generator (18).

9. The vehicle seat according to any of the preceding claims, **characterized in that** the gas generator is a tubular gas generator (18').

## Revendications

1. Siège de véhicule, comportant un dossier (14) et un module de coussin à gaz (16) intégré dans le dossier (14), lequel présente un coussin à gaz (20) et un générateur de gaz (18),
le coussin à gaz (20) étant agencé, à l'état de montage, de telle sorte qu'il s'étend allongé dans la direction de l'extension (L) verticale du dossier (14) et qu'il est plié transversalement à la direction d'extension (L) verticale, et le coussin à gaz (20) sortant hors du dossier (14) lors du déploiement,
**caractérisé en ce que**, dans un état gonflé, la hauteur (h) du coussin à gaz (20) correspond à l'extension verticale (L) du dossier (14),
le générateur de gaz (18), par rapport à l'extension longitudinale du coussin à gaz (20) plié, est agencé approximativement dans son milieu, et
le coussin à gaz (20) plié présente deux tronçons de paquet (22) flexibles qui sont agencés de part et d'autre du générateur de gaz (18).

2. Siège de véhicule selon la revendication 1, **caractérisé en ce que** le tracé des tronçons de paquet (22) flexibles est adapté au contour du dossier (14).

3. Siège de véhicule selon l'une des revendications précédentes, **caractérisé en ce que** le générateur de gaz (18) est agencé dans le coussin à gaz (20).

4. Siège de véhicule selon l'une des revendications précédentes, **caractérisé en ce qu'**il est prévu un boîtier (28) encastré par moussage dans un rembourrage du siège (10), boîtier dans lequel est inséré le module de coussin à gaz (16).

5. Siège de véhicule selon l'une des revendications précédentes, **caractérisé en ce que** le module de coussin à gaz (16) est encastré par moussage dans le siège (10).

6. Siège de véhicule selon l'une des revendications 1 à 3, **caractérisé en ce que** le dossier (14) présente un cadre (26) et **en ce que** dans le cadre (26) est prévu un espace de réception (40) pour le module de coussin à gaz (16).

7. Siège de véhicule selon l'une des revendications précédentes, **caractérisé en ce que** dans le dossier (14) est prévu un espace de réception (34) pour le module de coussin à gaz (16) et **en ce qu'**un tronçon d'une housse de siège (36) s'étend vers l'intérieur jusque dans l'espace de réception (34) et entoure le module de coussin à gaz (16).

8. Siège de véhicule selon l'une des revendications précédentes, **caractérisé en ce que** le module de coussin à gaz (16) est une unité préassemblée qui est réalisée sans boîtier extérieur rigide au moins dans la région située à l'extérieur du générateur de gaz (18).

9. Siège de véhicule selon l'une des revendications précédentes, **caractérisé en ce que** le générateur de gaz est un générateur de gaz tubulaire (18').
